# EUROPÄISCHE PATENTSCHRIFT

(11) **EP 1 078 779 B1**
(45) Veröffentlichungstag und Bekanntmachung des Hinweises auf die Patenterteilung: **08.06.2005**
(21) Anmeldenummer: 00117910.0
(22) Anmeldetag: 21.08.2000
(51) Int. Cl.: B60C 23/04

(54) **System für ein Kraftfahrzeug mit einer auf einem Rad befindlichen elektronischen Einheit und ausserhalb des Rades angeordneten Erregerspulen**
System for a vehicle with an electronic unit on a wheel and field windings placed outside the wheel
Système pour véhicule avec unité électronique sur une roue et bobines exitatrices placées en dehors de la roue

(30) Priorität: 21.08.1999 DE 19939800
(43) Veröffentlichungstag der Anmeldung: 28.02.2001
(73) Patentinhaber: Continental Aktiengesellschaft, 30165 Hannover (DE)
(72) Erfinder: Behrends, Holger, 30559 Hannover (DE)

(56) Entgegenhaltungen:
- EP-A- 0 505 905
- WO-A-88/01732
- US-A- 4 067 235

## Beschreibung

Die Erfindung betrifft ein System gemäß dem Oberbegriff des Anspruchs 1.

Moderne Kraftfahrzeuge verfügen häufig über ein Reifendruckkontrollsystem, das eine Zentraleinheit und - jedem Rad des Kraftfahrzeuges zugeordnet - eine Reifendruckkontrollvorrichtung enthält. Jede Reifendruckkontrollvorrichtung übermittelt in zeitlichen Abständen einen in dem Reifen gemessenen Luftdruck an die Zentraleinheit. Zusätzlich übermittelt jede Reifendruckkontrollvorrichtung eine individuelle Kennung, anhand der die Zentraleinheit erkennt, aus welcher Radposition der gemessene Luftdruck übermittelt worden ist. Die Zentraleinheit vergleicht den übermittelten Luftdruck mit einem für die entsprechende Radposition gespeicherten Luftdruck und erzeugt eine Warnung, wenn dieser über ein vorgegebenes Maß hinaus von dem gespeicherten Luftdruck abweicht.

Die erläuterten Reifendruckkontrollsysteme können nur dann einwandfrei funktionieren, wenn der Zentraleinheit die Zuordnung der individuellen Kennungen zu den Radpositionen bekannt ist. Dementsprechend muß diese Zuordnung z. B. aktualisiert werden, wenn an dem Kraftfahrzeug ein oder mehrere Räder gewechselt werden. Aus dem Stand der Technik sind bereits Zuordnungsverfahren bekannt, in denen die Reifendruckkontrollvorrichtungen als preiswerte Sender ausgebildet sind. Da die Reifendruckkontrollvorrichtungen jedoch keine Signale von der Zentraleinheit empfangen können (z. B. ein Signal, das zur Aussendung der individuellen Kennung auffordert), ist die Durchführung derartiger Zuordnungsverfahren aufwendig.

Es sind deshalb auch schon Reifendruckkontrollsysteme vorgeschlagen worden, in denen die Zentraleinheit ein Aufforderungssignal an jede Reifendruckkontrollvorrichtung übermittelt und diese daraufhin ihre individuelle Kennung an die Zentraleinheit aussendet (s. z. B. EP 0 626 911 B1). Zur Übermittlung des Aufforderungssignals von der Zentraleinheit an die Reifendruckkontrollvorrichtung kann beispielsweise eine außerhalb des Rades angeordnete Erregerspule verwendet werden, mittels der ein magnetisches Wechselfeld erzeugt wird, das eine elektrische Spannung in einer elektrisch leitfähigen Spule der Reifendruckkontrollvorrichtung induziert. Anhand dieser induzierten Spannung erkennt die Reifendruckkontrollvorrichtung, daß es die individuelle Kennung aussenden soll. Es hat sich gezeigt, daß es schwierig ist, ein magnetisches Wechselfeld zu erzeugen, das einerseits ausreichend stark ist, um in jeder Stellung des sich drehenden Rades in der Reifendruckkontrollvorrichtung eine ausreichende Spannung zu induzieren und andererseits nicht so stark ist, daß die Signale anderer sich im Radkasten befindlicher Sensoren (z.B. den Drehzahlsensoren eines Schlupfregelsystems) verfälscht werden.

In diesem Zusammenhang ist in der EP 0 505 905 A1 bereits folgendes vorgeschlagen worden: Außerhalb des Rades ist eine Erregerspule angeordnet, mittels der ein magnetisches Wechselfeld erzeugt wird. Die Erregerspule wird so ausgerichtet, daß das magnetische Wechselfeld eine Spannung in dem Wulstkem des Rades induziert. Die elektronische Einheit wird in dem Reifen relativ zum Wulstkem derart positioniert, daß das von dem Wulstkem erzeugte Magnetfeld eine Spannung in der Spule der elektronischen Einheit induziert. Das in der EP 0 505 905 A1 vorgeschlagene System macht sich zunutze, daß der Wulstkern den gesamten Umfang des Reifens umfaßt und somit in jeder beliebigen Stellung des Rades eine Spannung in diesen (und damit auch in die elektronische Einheit) induziert werden kann. Das erläuterte System erfordert es jedoch, daß die elektronische Einheit in einer definierten Position zum Wulstkern in den Reifen einvulkanisiert ist, was aufwendig und somit teuer ist. Darüber hinaus ist festzustellen, daß eine Einvulkanisierung der elektronischen Einheit in den Reifen nicht für alle Systeme geeignet ist. Zum Beispiel sollten die Reifendruckkontrollvorrichtungen eines Reifendruckkontrollsystems vorzugsweise direkt im Torusraum des Reifens angeordnet sein, um mit möglichst geringem Aufwand den Reifendruck und ggf. die Reifentemperatur messen zu können.

Aus der WO 88/01732 ist ein System der eingangs genannten Art bekannt. Bei dem aus dieser Druckschrift bekannten System sind die Erregerspulen jeweils seitlich des Rades angeordnet und ihre magnetischen Achsen verlaufen in axialer Richtung des Rades. Aufgrund der seitlichen Anordnung der Spulen vom Rad haben diese nur einen geringen Abstand voneinander, so daß ein starkes Magnetfeld erzeugt werden kann. Es ist jedoch festzustellen, daß die Spulen außerhalb des Radkastens liegen, der das Rad umgibt, und deshalb einfach beschädigt werden können.

Aus der US 4,067,235 ist ein System bekannt, das weitestgehend dem eingangs genannten System entspricht, bei dem jedoch zur Erzeugung des Magnetfeldes anstelle von Erregerspulen Permanentmagneten verwendet werden. Auch hier sind die Magneten seitlich des Rades angeordnet, so daß sich auch hier das o.g. Problem ergibt.

Der Erfindung liegt die Aufgabe zugrunde, ein System der eingangs erläuterten Art derart weiterzubilden, daß die Erregerspulen in dem Radkasten befestigt werden können, der das Rad umgibt.

Die Aufgabe wird durch den Anspruch 1 gelöst.

Der Vorteil der Erfindung ist darin zu sehen, daß die Erregerspulen in dem Radkasten befestigt werden können, der das Rad des Kraftfahrzeuges teilweise umschließt, so wie es auch in Anspruch 2 beansprucht ist. Vorzugsweise werden bei dem genannten Ausführungsbeispiel die magnetischen Achsen der Erregerspulen so ausgerichtet, daß sie nahezu horizontal verlaufen. Ein weiterer Vorteil der Erfindung ist darin sehen, daß die elektronische Einheit an beliebiger Stelle des Rades positioniert werden kann und dennoch ausreichend stark von dem durch die Erregerspulen erzeugten Magnetfeld durchsetzt wird. Insbesondere kann die elektronische Einheit im Torusraum des Reifens positioniert werden und dort als Reifendruckkontrollvorrichtung genutzt werden.

Gemäß einer Weiterbildung der Erfindung nach Anspruch 3 enthält der Radkasten einen Träger aus einem weitestgehend nicht ferromagnetischen Material, auf dem die Spulen befestigt sind. Dies hat den Vorteil, daß es nur zu einem geringen Schluß des von den Erregerspulen erzeugten Magnetfeldes über den Radkasten kommt. Somit ist der durch diesen Schluß herbeigeführte Magnetflußverlust gering.

Gemäß einer Weiterbildung der Erfindung nach Anspruch 4 besteht der Träger im Radkasten aus einem weitestgehend elektrisch isolierenden Material. Der Vorteil dieser Weiterbildung ist darin zu sehen, daß sich in dem Material des Trägers keine Wirbelströme ausbilden, die das von den Erregerspulen erzeugte Magnetfeld schwächen könnten. Bei modernen Kraftfahrzeugen bestehen die Spritzkotflügel an den Radkästen aus einem elektrisch isolierenden Kunststoffmaterial. Diese können bevorzugt als Träger für die Spulen im Radkasten verwendet werden, so daß die Merkmale der Ansprüche 3 und 4 automatisch erfüllt sind. Eine besondere Anpassung der Radkästen zur Erzielung der oben genannten Vorteile ist dann nicht notwendig.

Gemäß einer Weiterbildung der Erfindung nach Anspruch 5 ist die Spule der elektronischen Einheit flach ausgebildet und so geformt, daß ihre Oberflächennormale bereichsweise in die radiale Richtung und bereichsweise in die tangentiale Richtung des Rades weist. Verlaufen in diesem Fall die magnetischen Achsen der Erregerspulen weitestgehend in radialer Richtung des Rades, so wird durch diese Weiterbildung der Vorteil erreicht, daß die von der Spule der elektronischen Einheit umfaßte Fläche in jeder Stellung des Rades von dem Magnetfluß des Magnetfeldes durchflossen wird und eine Induzierung von Spannung in die Spule gewährleistet ist.

Gemäß einer Weiterbildung der Erfindung nach Anspruch 6 enthält die elektronische Einheit zwei Spulen, wobei die Oberflächennormale der einen Spule in die radiale Richtung und die Oberflächennormale der anderen Spule in die tangentiale Richtung weist. Durch diese Weiterbildung wird der gleiche Vorteil erreicht wie durch die Weiterbildung gemäß Anspruch 5.

Gemäß einer Weiterbildung der Erfindung nach Anspruch 7 sind die Erregerspulen jeweils in einem elektrischen Schwingkreis angeordnet, der bei seiner Resonanzfrequenz angeregt wird. Der Vorteil dieser Weiterbildung ist darin zu sehen, daß der die Spule treibende elektrische Generator zur Erregung des Magnetfeldes nur vergleichsweise kleine Ströme liefern muß. Somit verringert sich der Energieaufwand des Systems, was insbesondere dann von Vorteil ist, wenn das System auch bei ausgeschaltetem Motor des Kraftfahrzeuges betrieben werden soll.

Gemäß einer Weiterbildung der Erfindung nach Anspruch 8 ist die Spule der elektronischen Einheit in einem elektronischen Schwingkreis angeordnet, der auf den Schwingkreis der Erregerspulen abgestimmt ist. Der Vorteil dieser Weiterbildung ist darin zu sehen, daß sich die in der Spule induzierte Spannung gegenüber der in einer Spule induzierte Spannung, die nicht in einem Schwingkreis angeordnet ist, erhöht.

Gemäß einer Weiterbildung der Erfindung nach Anspruch 9 sind die Erregerspulen mindestens einen Zentimeter von umliegenden ferromagnetischen Materialien, also z. B. von der Karosserie des Kraftfahrzeuges, entfernt. Der mit dieser Weiterbildung erzielte Vorteil ist darin zu sehen, daß der Schluß des von den Erregerspulen erzeugten Magnetfeldes über die umliegenden ferromagnetischen Materialien und damit der Verlust des magnetischen Flusses verringert wird.

Ein Ausführungsbeispiel und weitere Vorteile der Erfindung werden im Zusammenhang mit den nachstehenden Figuren erläutert, darin zeigt:
- Fig. 1: ein erfindungsgemäßes System in schematischer Darstellung,
- Fig. 2: einen Ausschnitt aus der Figur 1,
- Fig. 3: zwei Erregerspulen,
- Fig. 4: das durch zwei Erregerspulen erzeugte Magnetfeld,
- Fig. 5: eine Spule der elektronischen Einheit,
- Fig. 6: eine elektronische Einheit in schematischer Darstellung.

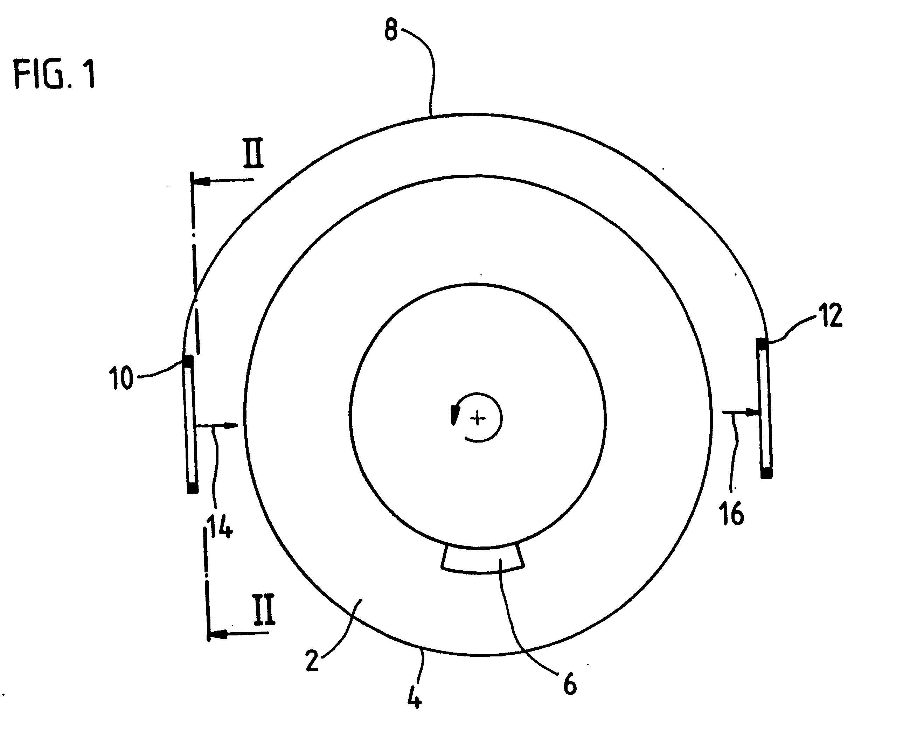

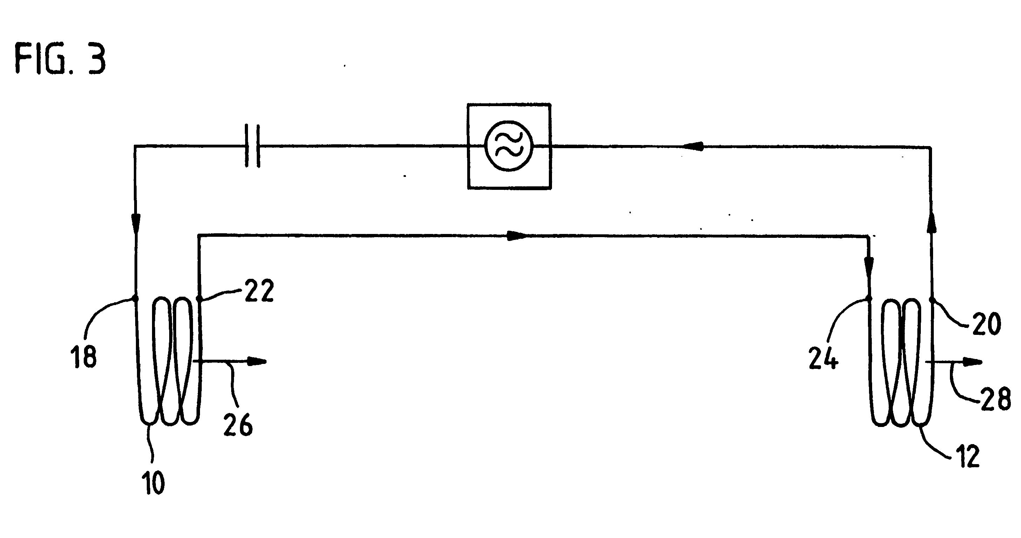

Figur 1 zeigt in schematischer Darstellung ein System für ein Kraftfahrzeug mit einem drehbar gelagerten Rad 2. In dem Torusraum des Reifens 4 ist eine elektronische Einheit 6 z.B. in Form einer Reifendruckkontrollvorrichtung 6 befestigt (z. B. an der Felge). Das Rad 2 wird zum Teil von einem Spritzkotflügel 8 im Radkasten 8 umschlossen, der vorzugsweise aus Kunststoff besteht. Auf dem Spritzkotflügel 8 sind elektrisch leitfähige Erregerspulen 10 und 12 derart angeordnet, daß das Rad 2 weitestgehend zwischen ihnen liegt. Darüber hinaus sind die Erregerspulen 10 und 12auf dem Spritzkotflügel 8 derart positioniert, daß die magnetischen Achsen (d. h. die Achsen entlang deren der magnetische Fluß innerhalb der Erregerspulen verläuft, wenn ein Wechselstrom durch diese getrieben wird), weitestgehend parallel zueinander oder weitestgehend auf einer Geraden liegen. In dem gezeigten Ausführungsbeispiel gemäß Figur 1 wird dieLage auf einer Geraden dadurch erreicht, daß die Erregerspulen 10 und 12 derart positioniert werden, daß die magnetischen Achsen 14 und 16 in weitestgehend radialer Richtung des Rades 2 verlaufen und weitestgehend horizontal ausgerichtet sind. Darüber hinaus sind die Erregerspulen 10 und 12 elektrisch so miteinander verbunden, daß der magnetische Fluß im Innem der Erregerspulen weitestgehend immer in die gleiche Richtung weist, wenn durch sie ein Wechselstrom getrieben wird (Näheres s. Figur 3). Die Richtung des magnetischen Flusses ist in der Figur 1 durch die Pfeilspitzen auf den magnetischen Achsen 14 und 16 angedeutet (die Richtung des magnetischen Flusses kehrt sich um, wenn sich die Richtung des Stromflusses durch die Erregerspulen 10 und 12 umkehrt).

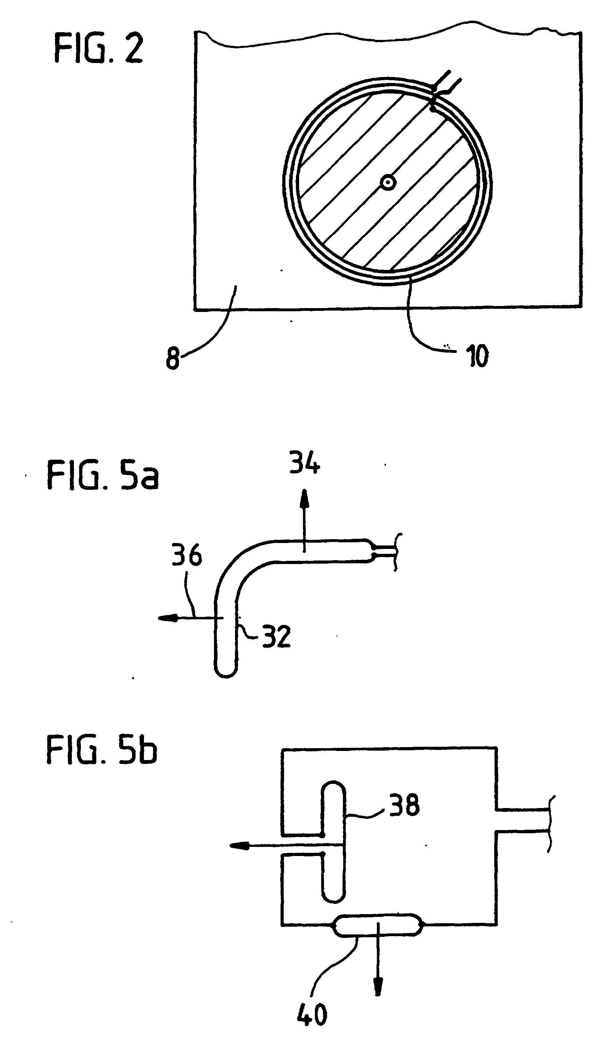

Figur 2 zeigt eine seitliche Draufsicht auf einen Teil des Spritzkotflügels 8, der die Erregerspule 10 enthält. Die Erregerspule 10 kann beispielsweise auf den Spritzkotflügel 8 angeklebt oder anderweitig an diesem befestigt sein. Um das durch die Erregerspule 10 erzeugte magnetische Feld zu verstärken, kann die von der Erregerspule 10 umfaßte Fläche des Spritzkotflügels 8 mit einer ferrometallischen Schicht von mindestens 1 mm Dicke versehen werden (in der Figur 2 angedeutet durch die Schraffur). Entsprechende Ausführungen gelten für die Erregerspule 12.

Figur 3 zeigt schematisch, wie ein Wechselstrom durch die Erregerspulen 10 und 12 zu treiben ist, damit der magnetische Fluß im Innern der Erregerspulen weitestgehend in die gleiche Richtung weist (wegen der besseren Übersichtlichkeit ist in der Figur 3 auf eine Darstellung des Spritzkotflügels 8 und des Rades 2 verzichtet worden). In der Figur 3 weisen die Erregerspulen 10 und 12 beide den gleichen Wicklungssinn auf. An die Erregerspulen 10 und 12 wird wie folgt eine Wechselspannung angelegt: Der Eingang 18 der Erregerspule 10 wird mit einem Pol und der Ausgang 20 der Erregerspule 12 wird mit dem anderen Pol der Wechselspannungsquelle elektrisch verbunden. Darüber hinaus wird der Ausgang 22 der Spule 10 elektrisch mit dem Eingang 24 der Spule 12 verbunden. Wird von der Wechselspannungsquelle eine Wechselspannung erzeugt, so wird durch die Erregerspulen 10 und 12 ein Wechselstrom getrieben. Hat dieser z. B. die in der Figur 3 eingezeichnete Richtung, so weist der magnetische Fluß im Innern der Erregerspulen 10 und 12 in die gleiche Richtung der Pfeile 26 und 28. Hat der Wechselstrom hingegen momentan die entgegengesetzte Richtung, so weist auch der magnetische Fluß im Inneren der Erregerspulen in die entgegengesetzte Richtung.

Hat die Erregerspule 12 einen von der Erregerspule 10 entgegengesetzten Wicklungssinn, so sind die elektrischen Leitungen, die auf die elektrischen Anschlüsse 20 und 24 der Erregerspule 12 führen, bzw. die elektrischen Leitungen, die auf die Anschlüsse 18 und 22 der Erregerspule 10 führen, zu vertauschen. Auch in diesem Fall weist der magnetische Fluß im Inneren der Erregerspulen 10 und 12 immer in die gleiche Richtung.

Der in der Figur 3 gezeigte Stromkreis kann gegebenenfalls durch einen Kondensator 30 zu einem elekrischen Schwingkreis ergänzt werden. Wird dieser mit einer Wechselspannung der Frequenz angeregt, die der Eigenfrequenz des Schwingkreises entspricht, so liegt Resonanz vor und der durch die Erregerspulen 10 und 12 getriebene Wechselstrom erreicht ein Maximum.

Die Wechselspannung wird in einem Reifendruckkontrollsystem beispielsweise durch die Zentraleinheit des Reifendruckkontrollsystems erzeugt.

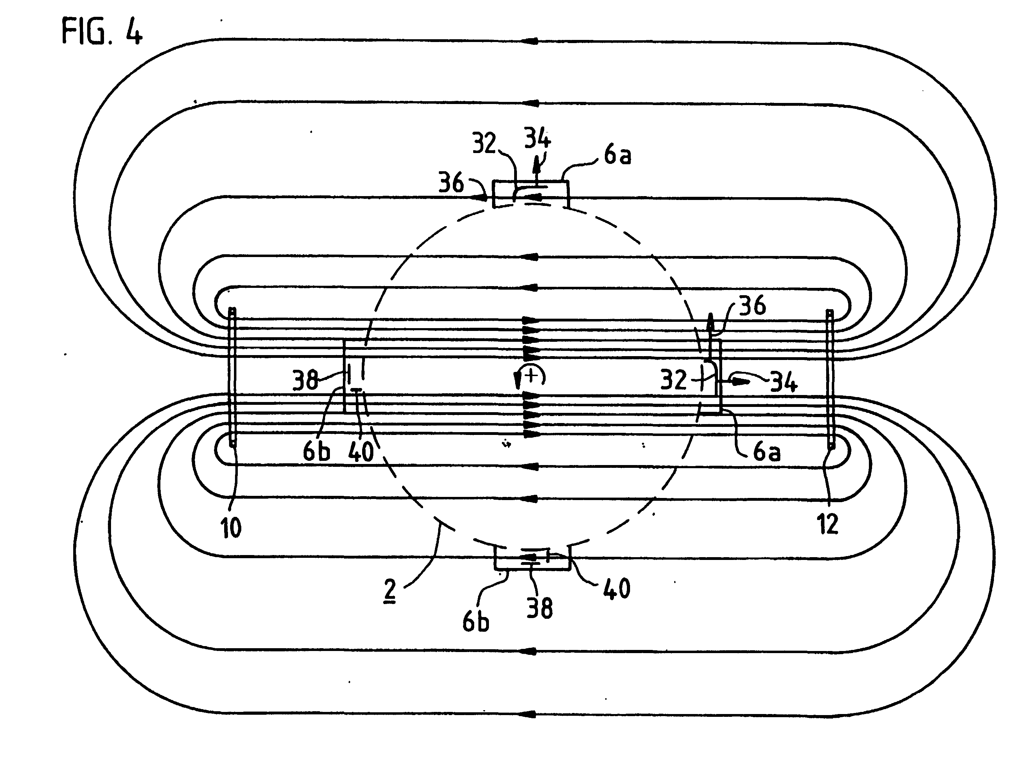

Figur 4 zeigt in schematischer Darstellung das von den Erregerspulen 10 und 12 erzeugte magnetische Wechselfeld. In der Figur 4 wird beispielhaft davon ausgegangen, daß die Felge des Rades 2 aus einem nicht ferromagnetischen Material besteht und weitestgehend elektrisch isolierend ist (in diesem Fall wird der Verlauf der Magnetfeldlinien des magnetischen Wechselfeldes nicht durch die Felge beeinflußt, so daß eine einfache Darstellung möglich ist). Eine aus der Fläche, die die Erregerspule 10 umfaßt, heraustretende Magnetfeldlinie tritt durch die von der Erregerspule 12 umfaßte Fläche und schließt sich außerhalb der von Erregerspulen 10 und 12 umfaßten Fläche. Die Erregerspulen 10 und 12 erzeugen somit ein magnetisches Wechselfeld, das weitestgehend dem von einem Stabmagneten erzeugten Magnetfeld entspricht, der von der Erregerspule 10 bis zur Erregerspule 12 reicht. Der einzige Unterschied besteht darin, daß sich die Richtung des von den Erregerspulen 10 und 12 erzeugten magnetischen Wechselfeldes mit der Richtung des Wechselstromes, der durch die Erregerspule 10 und 12 getrieben wird, ständig ändert. Das magnetische Wechselfeld verläuft zwischen den Erregerspulen 10 und 12 weitestgehend in horizonaler Richtung. Bei Verwendung einer Felge aus elektrisch leitfähigem Material kommt es zu einer Verzerrung des gezeigten magnetischen Wechselfeldes. Ist die Felge aus ferromagnetischen Stahl, kommt es zusätzlich zu einer stationären Verzerrung des magnetischen Feldes. Am prinzipiellen Verlauf des gezeigten Feldes ändert sich jedoch nichts.

Das von den Erregerspulen 10 und 12 erzeugte magnetische Wechselfeld ist im gesamten Bereich zwischen den Erregerspulen ausreichend groß, um in eine in diesem Bereich liegende elektronische Einheit 6 eine Spannung zu induzieren. Dennoch ist das magnetische Wechselfeld auch in unmittelbarer Nähe der Erregerspulen 10 und 12 nicht so groß, daß dort liegende Sensoren nachteilig beeinflußt werden könnten.

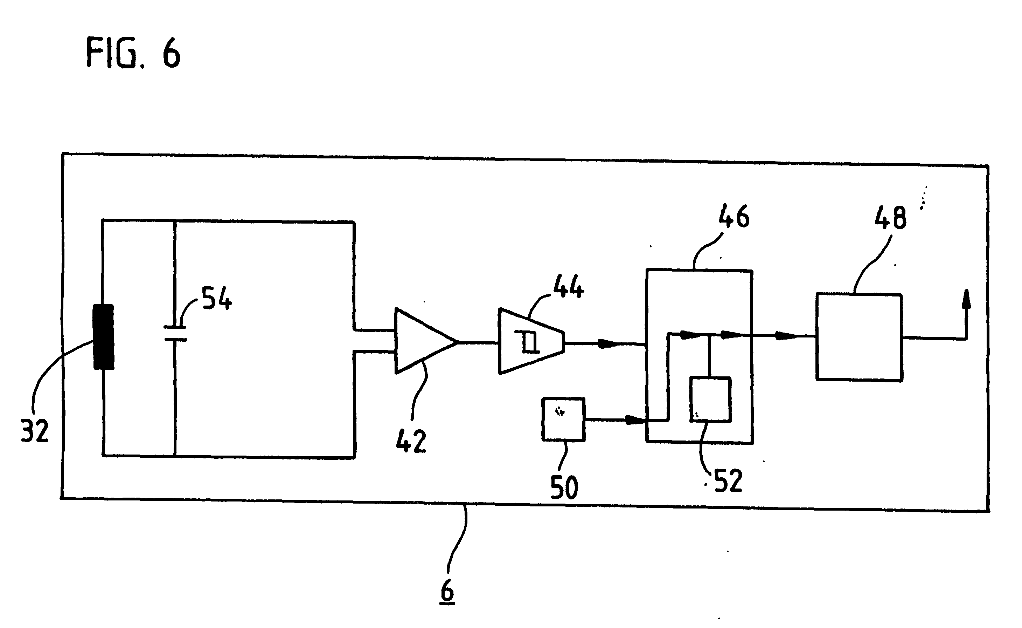

Dreht sich ein zwischen den Erregerspulen 10 und 12 angeordnetes Rad 2, so muß die Spule 32 der elektronischen Einheit 6 derart ausgerichtet sein, daß die von ihr umfaßte Fläche zumindest zum Teil in jeder Stellung des Rades von dem magnetischen Fluß durchflossen wird. Nur dann wird in der Spule 32 eine Spannung induziert. Bei der elektronischen Einheit 6a wird dies dadurch erreicht, daß die Spule 32 flach ausgebildet und so geformt ist, daß ihre Oberflächennormale bereichsweise in die radiale Richtung weist (s. Oberflächennormale 34) und bereichsweise in die tangentiale Richtung (s. Oberflächennormale 36) des Rades weist (wie die Spule im einzelnen aussieht, ist der Figur 5a zu entnehmen). Nimmt die elektronische Einheit 6a die Stellung "bei 12.00 Uhr" ein, so wird der Teil der Spule 32 von dem Magnetfluß durchsetzt, dessen Oberflächennormale 36 in die tangentiale Richtung des Rades weist. Nimmt die elektronische Einheit 6a hingegen die Stellung "bei 3.00 Uhr" ein, so wird der Bereich der Spule 32 von dem Magnetfluß durchflossen, dessen Flächennormale 34 in die radiale Richtung des Rades weist. Auch in allen anderen Stellungen wird die von der Spule 32 umfaßte Fläche von dem Magnetfluß ausreichend durchflossen, so daß in jeder Stellung der elektronischen Einheit 6a eine Spannung in der Spule 32 induziert werden kann.

Eine alternative Ausführungsform zeigt die elektronische Einheit 6b. Die elektronische Einheit 6b verfügt über zwei Spulen 38 und 40, wobei die Oberflächennormalen der Spule 38 in die radiale Richtung und die Oberflächennormale der Spule 40 in die tangentiale Richtung weist (wie die Spulen 38 und 40 im einzelnen aussehen, ist in der Figur 5b gezeigt).

Unabhängig von der Stellung des Rades 2 wird immer zumindest eine der beiden Spulen 38 und 40 von dem magnetischen Fluß des Magnetfeldes durchflossen, so daß immer zumindest eine Spannung induziert werden kann. In der Figur 4 ist die elektrische Einheit in der Stellung 9 Uhr", in der die Spule 38 optimal von dem magnetischen Fluß durchflossen wird, und in der Stellung "6 Uhr", in der die Spule 40 optimal von dem magnetischen Fluß durchflossen wird.

Es sind auch andere Ausbildungen der Spule der elektronischen Einheit 6 denkbar. Entscheidend ist nur, daß die von der Spule umfaßte Fläche in allen Stellungen des Rades 2 von dem magnetischen Fluß, den die Erregerspulen 10 und 12 erzeugen, durchflossen wird. Nur dann kann in jeder Stellung des Rades 2 eine Spannung in die Spule induziert werden.

Figur 6 zeigt in schematischer Darstellung den Aufbau einer elektronischen Einheit 6 in Form einer Reifendruckkontrolleinheit. Die leitenden Enden der Spule 32 werden auf einen Verstärker 42 geführt, dessen Ausgang wiederum auf einen Schmitt Trigger 44 geführt ist. Der Ausgang des Schmitt Triggers 44 führt auf einen Mikroprozessor 46, der über einen Speicher 52 verfügt. Darüber hinaus steht der Mikroprozessor 46 mit einem Drucksensor 50 und mit einem Hochfrequenzsender 48 in Verbindung.

Die Spule 32 kann durch einen Kondensator 54 zu einem Schwingkreis ergänzt werden. Wenn dieser Schwingkreis die gleiche Erregerfrequenz hat wie der Schwingkreis, in dem sich die Erregerspulen 10 und 12 befinden (s. Figur 3), kann besonders gut Energie in die Spule 32 eingekoppelt werden.

Der Mikroprozessor 46 befindet sich über weite Zeiträume in einem Schlafmodus, in dem er wenig Energie verbraucht, so daß die (in der Fig. 6 nicht gezeigte) Batterie, die die Einheit 6 mit Energie versorgt, nur wenig belastet wird. Durch das von den Erregerspulen 10 und 12 erzeugte Magnetfeld wird der Mikroprozessor 46 wie folgt "aufgeweckt": Durch das Magnetfeld wird eine Spannung in die Spule 32 induziert, die mit Hilfe des Verstärkers 42 verstärkt wird. Die verstärkte Spannung wird auf den Schmitt Trigger 44 geführt, der daraufhin einen Spannungsimpuls an den Mikroprozessor 46 abgibt, durch den dieser "aufgeweckt" wird. Der Mikroprozessor 46 überträgt nach dem Aufwecken Daten an den Hochfrequenzsender 48, der diese aussendet. Bei den Daten kann es sich beispielsweise um Druckdaten und um die eingangs erwähnte individuelle Kennung handeln. Die Druckdaten und die individuelle Kennung werden aus dem Speicher 52 des Mikroprozessors 46 ausgelesen. Alternativ ist es möglich, daß der Luftdruck des Reifens aktuell mit Hilfe des Drucksensors 50 bestimmt wird. Nach Aussendung der Daten geht der Mikroprozessor 46 wieder in seinen Schlafmodus über, bis er durch eine in die Spule 32 induzierte Spannung erneut aufgeweckt wird.

Auf die Aussendung einer individuellen Kennung kann auch verzichtet werden, weil mit Hilfe der beschriebenen Spulenanordnung in einem Radkasten die elektronische Einheit des diesem Radkasten zugeordneten Rades gezielt angesprochen und abgefragt werden kann (indem durch die Spulen in einem Radkasten ein Strom getrieben wird, wohingegen durch die Spulen in den anderen Radkästen kein Strom getrieben wird). Die Zuordnung der Daten zu der Radposition, aus der gesendet wurde, erfolgt dann aus der Kenntnis, in welcher Radposition ein Strom durch die Spulen im Radkasten getrieben wird.

Es ist ebenfalls möglich, mit Hilfe des durch die Erregerspulen 10 und 12 erzeugten magnetischen Wechselfeldes Daten in den Speicher 52 des Mikroprozessors einzuschreiben. Dies geschieht wie folgt: Enthält der Mikroprozessor 46 während eines durch seinen Taktgeber vorgegebenen zeitlichen Taktes infolge der Spannungsinduzierung in die Spule 32 über den Schmitt Trigger 44 einen Spannungsimpuls, so interpretiert er dieses als logische 1 (bzw. als logische 0) und schreibt diese Informationen sprechend in eine Speicherzelle des Speichers 52 ein. Enthält der Mikroprozessor 46 während eines oder mehrerer nachfolgender zeitlicher Takte keinen Spannungsimpuls, so interpretiert er dies als logische 0 (bzw. als logische 1) und schreibt diese Information entsprechend in weitere Speicherzellen des Speichers 52 ein. Eine "1" wird von dem Mikroprozessor 46 erst dann wieder in eine weitere Speicherzelle des Speichers 52 eingeschrieben, wenn er über den Schmitt Trigger 44 infolge der Spannungsinduzierung in die Spule 32 wieder einen Spannungsimpuls erhält. Auf die genannte Art und Weise kann beispielsweise die individuelle Kennung der Reifendruckkontrollvorrichtung 6 in den Speicher 52 durch die Zentraleinheit des Reifendruckkontrollsystems eingeschrieben werden.

### Bezugszeichenliste

- 2: Rad
- 4: Reifen
- 6: elektronische Einheit
- 8: Spritzkotflügel
- 10, 12: Erregerspulen
- 14, 16: magnetische Achsen
- 18: Eingang der Spule 10
- 20, 22: Ausgang der Spulen 12, 14
- 24: Eingang der Spule 12
- 26, 28: Pfeile
- 30: Kondensator
- 32: Spule
- 34, 36: Oberflächennormale
- 38, 40: Spulen
- 42: Verstärker
- 44: Schmitt Trigger
- 46: Mikroprozessor
- 48: Hochfrequenzsender
- 50: Drucksensor
- 52: Speicher
- 54: Kondensator

## Patentansprüche

1. System, insbesondere System für ein Kraftfahrzeug, das folgende Bestandteile enthält:
- ein drehbar gelagertes Rad (2), an dem eine elektronische Einheit (6) befestigt ist, die über eine elektrisch leitfähige Spule (32) verfügt
- eine außerhalb des Rades (2) angeordnete elektrisch leitfähige Erregerspule (10, 12), mittels der ein magnetisches Wechselfeld erzeugbar ist, das eine Spannung in der elektrisch leitfähigen Spule (32) der elektronischen Einheit (6) induziert
- mindestens eine weitere außerhalb des Rades (2) angeordnete elektrisch leitfähige Erregerspule (10, 12) angeordnet ist, wobei
- das Rad (2) zwischen den Erregerspulen (10, 12) liegt, und
- die magnetischen Achsen der Erregerspulen (10, 12) weitestgehend parallel zueinander oder weitestgehend auf einer Geraden liegen, und
- der magnetische Fluß im Inneren der Erregerspulen (10, 12) weitestgehend in die gleiche Richtung weist, wenn sie stromdurchflossen sind
**dadurch gekennzeichnet, daß** die magnetischen Achsen der Erregerspulen (10, 12) weitestgehend in radialer Richtung des Rades (2) verlaufen.

2. System nach Anspruch 1, **dadurch gekennzeichnet, daß** die Erregerspulen (10, 12) an einem Radkasten befestigt sind, der das Rad (2) teilweise umschließt.

3. System nach einem der Anspruch 2, **dadurch gekennzeichnet, daß** der Radkasten einen Träger (8) enthält, auf dem die Spulen befestigt sind und der aus einem Material besteht, das weitestgehend nicht ferromagnetisch ist.

4. System nach einem der Ansprüche 2 bis 3, **dadurch gekennzeichnet, daß** der Träger (8) aus einem weitestgehend elektrisch isolierenden Material besteht.

5. System nach einem der Ansprüche 2 bis 4, **dadurch gekennzeichnet, daß** die Spule (32) der elektronischen Einheit flach ausgebildet und so geformt ist, daß ihre Oberflächennormale (34, 36) bereichsweise in die radiale Richtung und bereichsweise in die tangentiale Richtung des Rades (2) weist.

6. System nach einem der Ansprüche 2 bis 4, **dadurch gekennzeichnet, daß** die elektronische Einheit (6) zwei Spulen (38, 40) enthält, wobei die Oberflächennormale (34, 36) der einen Spule in die radiale Richtung und die Oberflächennormale (34, 36) der anderen Spule in die tangentiale Richtung weist.

7. System nach einem der Ansprüche 1 bis 6, **dadurch gekennzeichnet, daß** die Erregerspulen (10, 12) jeweils in einem elektrischen Schwingkreis angeordnet sind, der bei seiner Resonanzfrequenz angeregt wird.

8. System nach Anspruch 7, **dadurch gekennzeichnet, daß** die Spule (32) der elektronischen Einheit (6) in einem elektrischen Schwingkreis angeordnet ist, der auf den Schwingkreis der Erregerspulen (10, 12) abgestimmt ist.

9. System nach einem der Ansprüche 1 bis 8, **dadurch gekennzeichnet, daß** die Erregerspulen (10, 12) mindestens einem Zentimeter von umliegenden ferromagnetischen Materialien entfernt sind.

## Claims

1. System, in particular system for a motor vehicle, which contains the following components:
- a rotatably mounted wheel (2) to which an electronic unit (6) which has an electrically conductive coil (32) is attached,
- an electrically conductive exciter coil (10, 12) which is arranged outside the wheel (2) and by means of which a magnetic alternating field can be generated and which induces a voltage in the electrically conductive coil (32) of the electronic unit (6),
- at least one further electrically conductive exciter coil (10, 12) is arranged outside the wheel (2),
- the wheel (2) being located between the exciter coils (10, 12),
- the magnetic axes of the exciter coils (10, 12) being located very largely parallel with one another or very largely on a straight line, and
- the magnetic flux in the interior of the exciter coils (10, 12) pointing very largely in the same direction when a current flows through them, **characterized in that**,
- the magnetic axes of the exciter coils (10, 12) extend very largely in the radial direction of the wheel (2).

2. System according to Claim 1, **characterized in that** the exciter coils (10, 12) are attached to a wheel casing which partially surrounds the wheel (2).

3. System according to Claim 2, **characterized in that** the wheel casing contains a carrier (8) to which the exciter coils (10, 12) are attached, and which is composed of a material which is very largely non-ferromagnetic.

4. System according to one of Claims 2 to 3, **characterized in that** the carrier (8) is composed of a very largely electrically insulating material.

5. System according to one of Claims 2 to 4, **characterized in that** the coil (32) of the electronic unit (6) is of flat construction and is shaped in such a way that its surface normals (34, 36) point in certain areas in the radial direction and in certain areas in the tangential direction of the wheel (2).

6. System according to one of Claims 2 to 4, **characterized in that** the electronic unit (6) contains two coils (38, 40), the surface normal (34, 36) of the one coil pointing in the radial direction and the surface normal (34, 36) of the other coil pointing in the tangential direction.

7. System according to one of Claims 1 to 6, **characterized in that** the exciter coils (10, 12) are each arranged in an electrical oscillatory circuit which is excited at its resonant frequency.

8. System according to Claim 7, **characterized in that** the coil (32) of the electronic unit (6) is arranged in an electrical oscillatory circuit which is matched to the oscillatory circuit of the exciter coils (10, 12).

9. System according to one of Claims 1 to 8, **characterized in that** the exciter coils (10, 12) are located at a distance of at least one centimetre from surrounding ferromagnetic materials.

## Revendications

1. Système, notamment système pour véhicule automobile qui comprend les composants suivants :
- une roue (2) supportée de manière à pouvoir tourner à laquelle est fixée une unité électronique (6) qui dispose d'une bobine conductrice d'électricité (32)
- une bobine excitatrice (10, 12) conductrice d'électricité disposée au-dehors de la roue (2) à l'aide de laquelle il est possible de générer un champ magnétique alterné qui induit une tension dans la bobine conductrice d'électricité (32) de l'unité électronique (6)
- au moins une bobine excitatrice additionnelle (10, 12) conductrice d'électricité disposée au-dehors de la roue (2),
- la roue (2) se trouvant entre les bobines excitatrices (10, 12) et
- les axes magnétiques des bobines excitatrices (10, 12) sont pour l'essentiel parallèles l'un par rapport à l'autre ou se trouvent pour l'essentiel sur une droite et
- le flux magnétique à l'intérieur des bobines excitatrices (10, 12) est pour l'essentiel dirigé dans la même direction lorsqu'elles sont traversées par un courant
**caractérisé en ce que** les axes magnétiques des bobines excitatrices (10, 12) s'étendent pour l'essentiel dans le sens radial de la roue (2).

2. Système selon la revendication 1, **caractérisé en ce que** les bobines excitatrices (10, 12) sont fixées à un passage de roue qui entoure partiellement la roue (2).

3. Système selon la revendication 2, **caractérisé en ce que** le passage de roue comprend un support (8) sur lequel sont fixées les bobines et qui se compose d'un matériau qui est pour l'essentiel non ferromagnétique.

4. Système selon l'une des revendications 2 à 3, **caractérisé en ce que** le support (8) se compose d'un matériau pour l'essentiel électriquement isolant.

5. Système selon l'une des revendications 2 à 4, **caractérisé en ce que** la bobine (32) de l'unité électronique est de forme plate et configurée de telle sorte que la normale à sa surface (34, 36) est dirigée par sections dans le sens radial et par sections dans le sens tangentiel de la roue (2).

6. Système selon l'une des revendications 2 à 4, **caractérisé en ce que** l'unité électronique (6) comprend deux bobines (38, 40), la normale à la surface (34, 36) de l'une des bobines étant dirigée dans le sens radial et la normale à la surface (34, 36) de l'autre bobine étant dirigée dans le sens tangentiel.

7. Système selon l'une des revendications 1 à 6,
**caractérisé en ce que** les bobines excitatrices (10, 12) sont respectivement disposées dans un circuit oscillant électrique qui est excité à sa fréquence de résonance.

8. Système selon la revendication 7, **caractérisé en ce que** la bobine (32) de l'unité électronique (6) est disposée dans un circuit oscillant électrique qui est accordé sur le circuit oscillant des bobines excitatrices (10, 12).

9. Système selon l'une des revendications 1 à 8, **caractérisé en ce que** les bobines excitatrices (10, 12) sont éloignées d'au moins un centimètre du matériau ferromagnétique qui les entoure.
